# EUROPEAN PATENT APPLICATION

(11) **EP 4 813 634 A1**
(43) Date of publication of application: **30.09.2026**
(21) Application number: 24894569.3
(22) Date of filing: 19.11.2024
(51) Int. Cl.: B32B 37/10, B32B 37/12, B32B 15/08, B32B 15/085, B32B 15/20, H01M 50/126, H01M 50/105

(54) **POUCH FILM AND MANUFACTURING METHOD THEREFOR**

(30) Priority: 20.11.2023 KR 20230160565; 18.11.2024 KR 20240164502
(71) Applicant: Youlchon Chemical Co., Ltd., Seoul 07057 (KR)
(72) Inventor: SONG, Nok Jung, Seoul 07057 (KR); HAN, Hee Sik, Ansan-si, Gyeonggi-do 15430 (KR); JANG, Jee Eun, Ansan-si, Gyeonggi-do 15430 (KR); LEE, Doohee, Ansan-si, Gyeonggi-do 15430 (KR); PARK, Eunyoung, Ansan-si, Gyeonggi-do 15430 (KR); SHIN, Sung Chul, Ansan-si, Gyeonggi-do 15430 (KR)
(74) Representative: Meissner Bolte Partnerschaft mbB
(86) International application number: PCT/KR2024/018273
(87) International publication number: WO 2025/110677

(57) **Abstract**

Provided is a pouch film including a sealant layer, an outer layer, and a barrier layer including aluminum, between the sealant layer and the outer layer, in which the number of air bubbles per unit area on a surface of the sealant layer ranges from 0.1 ea/mm² to 20 ea/mm². The number of air bubbles is reduced, to prevent an electrolyte solution from being introduced or prevent the sealant layer from being cracked and to improve the structure stability after a molding process is performed when a battery cell is manufactured.

## Description

### [Technical Field]

### CROSS-REFERENCE TO RELATED APPLICATION

This application claims the benefit of priority to Korean Patent Application No. 10-2023-0160565, filed in the Korean Intellectual Property Office on November 20, 2023, and Korean Patent Application No. 10-2024-0164502, filed in the Korean Intellectual Property Office on November 18, 2024, the entire contents of which are incorporated herein by reference.

### Technical Field

The present disclosure relates to a pouch film and a method for manufacturing the same.

### [Background Art]

Types of the secondary battery include a nickel cadmium battery, a nickel hydrogen battery, a lithium ion battery, and a lithium ion polymer battery. Such a secondary battery is applied and used for a larger product, such as an electric vehicle or a hybrid vehicle, which requires high power, a power storage device, which stores extra generated power or renewable energy, and a backup power storage device, as well as a smaller product including a digital camera, a P-DVD, an MP3P, a cellular phone, a PDA, a Portable Game Device, a Power Tool, and an E-bike.

To manufacture such a secondary battery, first, electrode active material slurry are coated to a cathode current collector and an anode current collector to manufacture a cathode and an anode to be stacked at opposite sides of a separator, thereby forming an electrode assembly in a specific shape. In addition, after the electrode assembly is received in a battery case, and an electrolyte is introduced into a result, the result is sealed.

The secondary battery may be classified into a pouch-type, a cylinder-type, or a prim-type, depending on the type of an exterior material of the battery case to receive the electrode assembly.

Among the above secondary batteries, the type of the pouch-type battery, which has the form in which the electrode assembly (cell) is built in a pouch of a metal laminate sheet, is easily manufactured, and has lower manufacturing costs. In particular, as the pouch-type battery has a plurality of unit cells connected in series or in parallel such that a larger-capacity battery pack is easily manufactured, the pouch-type battery is utilized in a field mainly requiring a larger-capacity secondary battery such as an electric vehicle. A pouch, which is the case of the pouch-type secondary battery, is manufactured by performing a press forming process with respect to a pouch film laminate stack structure having flexibility to form a cup part. In addition, when the cup part is formed, the electrode assembly is received in a receiving space of the cup part and a sealing part thereof is sealed to manufacture the secondary battery.

Meanwhile, in a conventional pouch film product, during a lamination process of a sealant layer, which is for example a sealant layer including polypropylene, and a barrier layer, air bubbles may be formed due to air introduced into interfaces of the polypropylene and due to the difference in sliding speed of polypropylene. In this case, the air bubbles may cause the introduction of an electrolyte solution or cause cracks or defects of the sealant layer after a molding process is performed, when a secondary battery cell is manufactured. Accordingly, research and studies are essentially required on a process manner for reducing the air bubbles.

### [Disclosure]

### [Technical Problem]

An aspect of the present disclosure provides a method for manufacturing a pouch film, capable of reducing an insulation resistance defect rate by reducing air bubbles formed at an interface of a sealant layer.

Another aspect of the present disclosure provides a pouch film which is capable of controlling the number of air bubbles in a sealant layer to prevent an electrolyte solution from being introduced into a pouch film and to increase electrical efficiency.

### [Technical Solution]

The present disclosure provides a pouch film and a method for manufacturing the pouch film.
(1) The present disclosure provides a pouch film which includes a sealant layer, an outer layer, and a barrier layer including aluminum and disposed between the sealant layer and the outer layer, in which the number of air bubbles in a unit area on a surface of the sealant layer ranges from 2.5 ea/mm² to 20 ea/mm².
(2) The present disclosure provides a pouch film in which a ratio of an area occupied by the air bubbles relatively to a unit area on the surface of the sealant layer ranges 0.1 % to 1.1 %, in (1).
(3) The present disclosure provides a pouch film in which the number of air bubbles having a longer length of at least 20 µm per unit area is at most 6.0 ea/mm², in (1) or (2).
(4) The present disclosure provides a pouch film in which the number of air bubbles, which have a longer length of less than 20 µm, among air bubbles is at most 9.0 ea/ mm² in any one of (1) to (3).
(5) The present disclosure provides a pouch film in which a TD based on the number of air bubbles on the surface of the sealant layer, which is measured through following measuring manner is at most 5 in any one of (1) to (4).

### [Measuring manner]

An image of the interface between the barrier layer and the sealant layer is taken by using an optical microscope (OLS5100 (3D laser microscope) by Olympus) having Lens ×10, a measurement area of 1.637 mm², and a white LED lamp light source. The area of the air bubbles appeared at the interface between the barrier layer and the sealant layer is measured by inputting a magnification of the taken image. The number of air bubbles per unit area is calculated by dividing the measured number of air bubbles by the measured area of the air bubbles. A deviation value is calculated by calculating the number of air bubbles per unit area at a gap of 10 cm based on an entire width of an MR.

(6) The present disclosure provides a pouch film in which the sealant layer includes at least one type selected from the group consisting of polyethylene, polypropylene, polycarbonate, polyethylene terephthalate, polyvinyl chloride, an acrylic polymer, polyacrylonitrile, polyimide, polyamide, cellulose, aramid, nylon, polyester, poly(p-phenylene benzobisoxazole), polyarylate, Teflon, and glass fiber, in any one of (1) to (5).

(7) The present disclosure provides a pouch film in which the sealant layer includes an extrusion coating layer and a cast polypropylene layer, in any one of (1) to (6).

(8) The present disclosure provides a pouch film in which an insulation resistance defect rate of the pouch film, which is measured through a following method for measuring insulation resistance defect rate is less than 0.9%, in any one of (1) to (7).

### [Method for measuring insulation resistance defect rate]

A total of 1,000 dummy cells (small cells) having a size of 30 mm × 40 mm being manufactured, a voltage of 250 V being applied to an aluminum tab part and an aluminum layer (barrier layer) part of a pouch to measure an insulation resistance value (GΩ) using an insulation resistance measuring device, and a relevant cell being recorded as being defective and a defect rate being calculated when the insulation resistance value is at most 100 MΩ.

(9) The present disclosure provides a method for manufacturing a pouch film, which includes the steps for introducing the barrier layer and the sealant layer into a roll-to-roll device including a nip roll, a backup roll, and a cooling roll to laminate the sealant layer on one surface of the barrier layer and bonding an outer layer on an opposite surface of the barrier layer, in which the barrier layer and the sealant layer introduced are applied with the pressure ranging from 5 bar to less than 8 bar, and the step difference between the central portion and opposite end portions of the nip roll ranges from more than 0.4 mm to less than 1.2 mm.

(10) The present disclosure provides a method for manufacturing a pouch film, in which the backup roll makes contact with the nip roll, and applies pressure ranging from 5 bar to less than 8 bar to the nip roll, in (9).

(11) The present disclosure provides a method for manufacturing a pouch film, in which the laminating includes adding an additive including at least one selected from the group consisting of polytetrafluoroethylene, a silicone-based resin, and an amide-based resin, in (9) or (10).

(12) The present disclosure provides a method for manufacturing a pouch film, in which the additive is added in an amount ranging from 500 ppm to 10,000 ppm, based on a total weight of the sealant layer, in (11).

(13) The present disclosure provides a method for manufacturing a pouch film, in which the pressure of the nip roll is equal to the pressure applied to the nip roll by the backup roll in any one of (9) to (12).

(14) The present disclosure provides a method for manufacturing a pouch film, in which the step difference between the central portion and the opposite end portions of the nip roll ranges from 0.6 mm to 0.8 mm in any one of (9) to (13).

### [Advantageous Effects]

According to the method for manufacturing the pouch film of the present disclosure, the pressure of the nip roll and the pressure of the backup roll, and the crown of the roll may be controlled, and the additive may be added when the lamination process is performed, thereby controlling the number of air bubbles in the pouch film, and reducing the insulation resistance defect rate.

According to the pouch film of the present disclosure, as the number of air bubbles is controlled to prevent the electrolyte solution from being introduced into the pouch film and to increase the electrical efficiency.

### [Description of Drawings]

FIG. 1 illustrates the number of air bubbles per unit area of a sealant layer according to Example 2;
FIG. 2 illustrates the number of air bubbles per unit area of a sealant layer according to Comparative Example 1;
FIG. 3 illustrates the number of air bubbles per unit area of a sealant layer according to Comparative Example 2; and
FIG. 4 is a side view of a nip roll according to the present disclosure.

### [Mode for Invention]

Hereinafter, the present disclosure will be described in more detail for the understanding of the present disclosure. In this case, terms or words used in the present specification and the claims should not be interpreted as commonly-used dictionary meanings, but be interpreted as to be relevant to the technical scope of the present disclosure based on the fact that the inventor may properly define the concept of the terms to explain the present disclosure in best ways.

The terms used in the present disclosure are provided only for the illustrative purpose, and the present disclosure is not limited thereto. The singular forms are intended to include the plural forms unless the context clearly indicates otherwise.

In this specification, it will be further understood that the terms "comprises," "includes," or "has," specify the presence of stated features, numbers, steps, components, parts, or the combination thereof, but do not preclude the presence or addition of one or more other features, numbers, steps, components, and/or the combination thereof.

### Pouch film

The present disclosure provides a sealant layer, an outer layer, and a barrier layer including aluminum and disposed between the sealant layer and the outer layer, in which the number of air bubbles per unit area on a surface of the sealant layer ranges from 0.1 ea/mm² to 20 ea/mm².

Conventionally, in the manufacturing procedure of the pouch film, during a laminating process for the sealant layer including polypropylene, air bubbles may be produced due to air introduced into an interface of the sealant layer and due to the difference in sliding speed of polypropylene. Accordingly, the difficulty in laminating the sealant layer may be increased. The air bubbles produced may cause the introduction of the electrolyte solution or cause cracks to the sealant layer with a higher possibility after a molding process is performed, when a secondary battery cell is manufactured. Accordingly, the air bubble issues have to be resolved in terms of the structure stability and the performance of the secondary battery cell.

Accordingly, the inventors of the present disclosure controlled various process conditions for a nip roll and a backup roll used in a lamination process of the sealant layer and the barrier layer to develop a pouch film significantly reduced in air bubbles produced on the surface of the sealant layer.

According to the present disclosure, the number of air bubbles per unit area on the surface of the sealant layer may range from 2.5 ea/mm² to 20.0 ea/mm². For example, the number of air bubbles per unit area on the surface of the sealant layer may be at most 20.0 ea/mm², at most 19.0 ea/mm², at most 18.0 ea/mm², at most 17.0 ea/mm², at most 16.0 ea/mm², at most 15.5 ea/mm², at most 15.0 ea/mm², at most 14.8 ea/mm², at most 14.0 ea/mm², at most 13.8 ea/mm², at most 13.0 ea/mm², at most 12.0 ea/mm², at most 11.0 ea/mm², at most 10.2 ea/mm², at most 10.0 ea/mm², at most 9.0 ea/mm², at most 8.0 ea/mm², at least 0.1 ea/mm², at least 0.5 ea/mm², at least 1.0 ea/mm², at least 1.5 ea/mm², at least 2.0 ea/mm² or least 2.5 ea/mm². When the number of air bubbles per unit area on the surface of the sealant layer is more than an upper limit of the range, the significant number of air bubbles are present on the surface of the sealant layer, to deteriorate electrolyte resistance properties, to increase an insulation resistance defect rate to deteriorate insulation characteristics, and to deteriorate the heat adhesion strength and peel strength characteristics. In addition, when the number of air bubbles per unit area on the surface of the sealant layer is less than a lower limit of the above range, the number of air bubbles is theoretically preferably close to 0. However, it is impossible to achieve zero air bubbles in an actual process, work and process difficulty of manufacturing the pouch film including the number of air bubbles, which is less than the lower limit range, is significantly high, and inefficient in terms of costs. In addition, the pressure should be increased to the maximum level during a process. In this case, the insulation defect rate is rather increased due to resin degradation. Herein, the number of air bubbles was measured through the following manner. An image of the interface between the barrier layer and the sealant layer was taken using an optical microscope OLS5100 (3D laser microscope by Olympus), a lens ×10, a measurement area of 1.637 mm², and a lamp light source of a white LED. The area of the air bubbles appeared at the interface between the barrier layer and the sealant layer was measured by inputting a magnification of the taken image. The number of air bubbles per unit area was calculated by dividing the measured number of air bubbles by the measured area.

In addition, according to an embodiment of the present disclosure, the number of air bubbles having a longer length of at least 20 µm per unit area is at most 6.0 ea/mm². For example, the number of air bubbles, which have a longer length of at least 20 µm, among air bubbles may be, per unit area, at most 6.0 ea/mm², at most 5.6 ea/mm², at most 5.5 ea/mm², at most 5.0 ea/mm², at most 4.5 ea/mm², at most 4.0 ea/mm², at most 3.5 ea/mm², at most 3.3 ea/mm², at most 3.1 ea/mm², at most 3.0 ea/mm², at most 2.9 ea/mm², at most 2.7 ea/mm² or at most 2.5 ea/mm².

In addition, according to an embodiment of the present disclosure, the number of air bubbles, which have a longer length of less than 20 µm, per unit area may be at most 9.0 ea/mm². For example, the number of air bubbles, which have a longer length of less than 20 µm, among air bubbles may be, per unit area, at most 9.0 ea/mm², at most 8.5 ea/mm², at most 8.4 ea/mm², at most 8.0 ea/mm², at most 7.5 ea/mm², at most 7.0 ea/mm², at most 6.5 ea/mm², at most 6.0 ea/mm², at most 5.5 ea/mm², at most 5.2 ea/mm², at most 5.0 ea/mm², at most 4.5 ea/mm², at most 4.0 ea/mm², at most 3.5 ea/mm², at most 3.0 ea/mm², at most 2.5 ea/mm², at most 2.0 ea/mm², at most 1.9 ea/mm², at most 1.7 ea/mm², at most 1.5 ea/mm². Air bubbles having various sizes are present on the surface of the sealant layer. When the air bubbles are classified, the air bubbles are classified into smaller-particle-diameter air bubbles, which have a shorter length ranging from more than about 0 µm to less than 20 µm, and larger-particle-diameter air bubbles which have a longer length of at least 20 µm. in this case, the larger-particle-diameter air bubbles having a longer length of at least 20 µm more greatly degrade the physical properties of the pouch film, as compared to the smaller-particle-diameter air bubbles. Accordingly, the reduction of the larger-particle-diameter is important. Accordingly, when the number of air bubbles, which have a longer length of at least 20 µm, per unit area and the number of air bubbles, which have a shorter length of less than 20 µm, per unit area are controlled within the range, the electrolyte resistance characteristic, the insulating property, thermal adhesion strength, and the peel strength characteristic may be improved. the longer length means the length of the longest axis when the air bubble has a circular, elliptical, or irregular shape.

In this case, an image of the longer side of the air bubble was taken at the interface between the barrier layer and the sealant layer by using an optical microscope (OLS5100 (3D laser microscope) by Olympus) having Lens ×10, a measurement area of 1.637 mm², and a white LED lamp light source, for measurement.

According to an embodiment of the present disclosure, a ratio of an area occupied by the air bubble relative to a unit area on the surface of the sealant layer ranges from 0.1% to 1.1%. The ratio of an area occupied by the air bubble relative to a whole surface of the sealant layer may be at most 1.10%, at most 1.05%, at most 1.00%, at most 0.95%, at most 0.90%, at most 0.85%, at most 0.80%, at most 0.75%, at most 0.70%, at most 0.65%, at most 0.50%, at most 0.45%, at most 0.43%, at most 0.40%, at most 0.35%, at most 0.30%, at most 0.25%, at most 0.24%, at most 0.18%, at most 0.16%, at most 0.15%, at most 0.13%. When the ratio occupied by the air bubble relative to a unit area of the surface of the sealant layer satisfies the range, excellent thermal adhesion strength and excellent insulation resistance characteristics may be exhibited. In this case, the ratio occupied by the air bubble may be measured through the following manner. An image of the interface between the barrier layer and the sealant layer was taken by using an optical microscope (OLS5100 (3D laser microscope) by Olympus) having Lens ×10, a measurement area of 1.637 mm², and a white LED lamp light source. The area of the air bubbles appeared at the interface between the barrier layer and the sealant layer was measured by inputting a magnification of the taken image. The number of air bubbles per area was calculated by dividing the sum of the air bubble areas after the measurement by the measurement area of 1.637 mm².

According to an embodiment of the present disclosure, a TD based on the number of air bubbles, which were measured through the following measuring manner, on the surface of the sealant layer may be at most 5.

### [Measuring manner]

An image of the interface between the barrier layer and the sealant layer was taken by using an optical microscope (OLS5100 (3D laser microscope) by Olympus) having Lens ×10, a measurement area of 1.637 mm², and a white LED lamp light source. The area of the air bubbles appeared at the interface between the barrier layer and the sealant layer was measured by inputting a magnification of the taken image. The number of air bubbles per unit area was calculated by dividing the measured number of air bubbles by the measurement area. The deviation value was calculated by calculating the number of air bubbles per unit area at a gap of 10 cm based on the entire width of the MR.

Specifically, regarding a TD based on the number of air bubbles on the surface of the sealant layer, when the area of the surface of the sealant layer is divided in a TD direction, the area of the surface of the sealant layer in the TD direction, which is divided from an edge of the MR of the test sample of the sealant layer to have the same width, may be divided into five regions of a first end portion (OS; operating side), a second end portion, the central portion (CEN; center), a third end portion, and a fourth end portion (DS; drive side), and the deviation of the number of air bubbles present in each region may be calculated. For example, the TD based on the number of air bubbles may be at most 5.0, at most 4.5, at most 4.0, at most 3.8, at most 3.5, at most 3.1, at most 3.0, at most 2.5 or at most 2.0. When the TD based on the number of air bubbles satisfies the range, uniform quality may be exhibited throughout the whole surface area of the sealant layer, thereby improving the quality reliability and the structural stability.

According to an embodiment of the present disclosure, the insulation resistance defect rate of the pouch film according to the manner described below may be less than 0.9%.

### [Method for measuring insulation resistance defect]

Specifically, according to the method for measuring the insulation resistance, a total of 1,000 dummy cells (small cells) having a size of 30 mm × 40 mm were manufactured, a voltage of 250 V is applied to an aluminum tab part and an aluminum layer (barrier layer) part of a pouch to measure an insulation resistance value (GR) using an insulation resistance measuring device. When the insulation resistance value is at most 100 MΩ, a relevant cell was recorded as being defective and a defect rate was calculated. For example, the insulation resistance defect rate may be less than 0.90%, at most 0.87%, at most 0.85%, at most 0.80%, at most 0.75%, at most 0.70%, at most 0.65%, at most 0.60%, at most 0.55%, at most 0.50%, at most 0.45%, at most 0.43%, at most 0.40%, at most 0.35%, at most 0.30%, at most 0.25%, at most 0.21%, at most 0.20%, at most 0.15% or at most 0.13%. When the insulation resistance defect rate satisfies the range, the insulating property of the pouch film may be improved.

According to the present disclosure, the pouch film includes an outer layer, a barrier layer, and a sealant layer.

The outer layer included in the pouch film blocks the contact with the outside to seal the electrode assembly received in the pouch film. Accordingly, the outer layer of the pouch film should have excellent processability and formability. The processability and formability are influenced by a mechanical property. Specifically, the processability and formability are influenced by the mechanical property of the outer layer.

The outer layer may be an outermost layer of the pouch film for the exterior of the lithium secondary battery. The outer layer may have an appropriate thickness within the range sufficient to ensure the mechanical strength and formability for an exterior material. For example, the thickness of the outer layer may be at least 15 µm, at least 20 µm, at least 25 µm, at least 27 µm, at least 35 µm, at least 37 µm, at most 70 µm, at most 50 µm, at most 40 µm. When the thickness of the outer layer satisfies the range, a higher dielectric breakdown voltage may be maintained.

The outer layer includes a first outer layer and a second outer layer. The first outer layer may include at least one compound selected from the group consisting of polyethylene terephthalate, polybutylene terephthalate, polytrimethylene terephthalate, and polyethylene naphthalate.

In addition, the second outer layer serving as a heat-resistant resin layer having a melting point greater than a heat-sealing temperature of the sealant layer may include at least one compound selected from the group consisting of a polyamide-based compound, a polyester-based compound, a polyolefin-based compound, and a polyacrylic-based compound.

According to an embodiment of the present disclosure, the outer layer may include a film in which the first outer layer (polyethylene terephthalate) and the second outer layer (nylon) are laminated. In this case, the first outer layer having the thinner thickness and the second outer layer having the thicker thickness are advantageous in terms of formability. However, the first outer layer having the thinner thickness may be disadvantageous in terms of the dielectric breakdown voltage. In this regard, the thickness of the second layer may be at least 10 µm, at least 12 µm, at least 15 µm, at least 20 µm, at most 40 µm, at most 35 µm, at most 30 µm, at most 27 µm, at most 25 µm, and the thickness of the first outer layer may be at least 5 µm, at least 8 µm, at least 10 µm, at least 12 µm, at most 30 µm, at most 25 µm, at most 20 µm, at most 17 µm, at most 15 µm.

The sealant layer may be an innermost layer of the pouch film for exterior of the secondary battery. In other words, the sealant layer may make direct contact with a battery body part (e.g., an electrode, a separator and/or an electrolyte solution). Accordingly, the sealant layer should have excellent electrolyte resistance and an excellent insulating property. To this end, the sealant layer may include at least a polyolefin-based resin. The polyolefin-based resin has excellent electrolyte resistance and an excellent insulating property. Accordingly, even the sealant layer including the polyolefin-based resin may also have the excellent electrolyte resistance and the excellent insulating property derived from the polyolefin-based resin.

According to an embodiment of the present disclosure, the sealant layer may provide a pouch film including at least one selected from the group consisting of polyethylene, polypropylene, polycarbonate, polyethylene terephthalate, polyvinyl chloride, an acrylic-based polymer, polyacrylonitrile, polyimide, polyamide, cellulose, aramid, nylon, polyester, poly(p-phenylene benzobisoxazole) (PBO), polyarylate, Teflon, and glass fiber.

For example, the sealant layer may have a thickness of at least 20 µm, at least 30 µm, at least 40 µm, or at least 50 µm, and at most 100 µm, at most 90 µm, at most 80 µm, at most 70 µm, or at most 60 µm. When the thickness of the sealant layer satisfies the numerical range, the sealant layer may exhibit excellent electrolyte resistance and the excellent insulating property.

According to an embodiment of the present disclosure, the sealant layer may include at least two laminates to realize multiple functions. Specifically, the sealant layer may include a first sealant layer disposed on the barrier layer, and a second sealant layer disposed on the first sealant layer. In this case, the first sealant layer may be a layer which assists the adhesion between the barrier layer and the second sealant layer to more improve the function of the sealant layer. The second sealant layer may be a layer which forms the innermost sealant layer of the pouch film to perform a sealing function while preventing a non-aqueous electrolyte solution from leaking. The first sealant layer may be an extrusion lamination coating (Extrusion Lamination Coating; EC) layer (mainly an extruded polypropylene layer), and the second sealant layer may be a polypropylene (PP) layer resin, preferably a cast polypropylene (CPP) layer, disposed under the first sealant layer (inside based on the pouch film). In this case, for example, the CPP layer of the sealant layer may have the thickness of, for example, at least 20 µm, at least 30 µm, at least 40 µm, at least 50 µm, at most 80 µm, at most 70 µm, at most 60 µm, at least 0 µm, at least 10 µm, at least 20 µm, at least 30 µm, at most 60 µm, at most 50 µm, at most 40 µm.

Further, according to an embodiment of the present disclosure, the polypropylene (PP) layer of the sealant layer may include various additives (rubber, elastomer, slip agent, etc.) depending on the required physical properties.

The barrier layer may be an intermediate layer (for example, a layer disposed between the outer layer and the sealant layer) of the pouch film for the exterior of the lithium secondary battery, and may serve to prevent the penetration of the gas and/or the moisture. The type of the barrier layer is not particularly limited thereto. For example, the barrier layer may include at least one selected from the group consisting of aluminum, stainless steel, copper, titanium, and an alloy thereof. Specifically, the barrier layer may include aluminum (Al).

The barrier layer may have an appropriate thickness within a range for effectively preventing the gas and/or moisture described above from being infiltrated into the barrier layer and for ensuring sufficient formability. For example, the barrier layer may have the thickness of at least 20 µm, at least 30 µm, at least 40 µm, at least 50 µm, at least 55 µm, at least 60 µm, at most 150 µm, at most 140 µm, at most 130 µm, at most 125 µm, at most 120 µm, at most 115 µm, at most 110 µm, at most 105 µm, at most 100 µm, at most 95 µm, at most 90 µm, at most 85 µm, at most 80 µm

### Pouch-type secondary battery case and secondary battery

The secondary battery according to the present disclosure includes a pouch-type secondary battery case including the battery body part and the pouch film, and the secondary battery case may include the pouch film according to the present disclosure. The battery body part is sealed by the pouch-type secondary battery case. For example, the secondary battery may be a lithium secondary battery. In this case, the battery body part may include an anode for a lithium secondary battery, a cathode for the lithium secondary battery, and an electrolyte solution.

The cathode for the lithium secondary battery is not particularly limited, as long as the cathode for the lithium secondary battery is commonly used. For example, the cathode for the lithium secondary battery may include a cathode active material such as LiCoO₂, LiMnO₂, LiFeO₂, or Li(Ni_{0.6}Mn_{0.2}Co₀.₂)O₂.

The electrolyte solution may include a lithium salt and a non-aqueous organic solvent. In this case, the lithium salt and the non-aqueous organic solvent are not particularly limited, as long as the lithium salt and the non-aqueous organic solvent are commonly used for the lithium secondary battery electrolyte and an organic solvent.

The anode for the lithium secondary battery is not particularly limited, as long as the anode for the lithium secondary battery is commonly used. For example, the anode for the lithium secondary battery may include an anode active material such as a carbon-based active material or a silicon-based active material.

A case for the pouch-type secondary battery case may have excellent sealing intensity characteristics. Accordingly, the battery body part sealed by the pouch-type secondary battery case may not be exposed to the external environment.

### Method for manufacturing pouch film

Hereinafter, a method for manufacturing a pouch film according to the present disclosure will be described. The method for manufacturing the pouch film is not particularly limited to the method to be described below. The manufacturing method may be one of several methods for manufacturing the pouch film.

The present disclosure provides the method for manufacturing the pouch film, which includes the steps for introducing the barrier layer and the sealant layer into a roll-to-roll device including a nip roll, a backup roll, and a cooling roll to laminate the sealant layer on one surface of the barrier layer and bonding an outer layer on an opposite surface of the barrier layer. The nip roll may apply the pressure ranging from 5 bar to less than 8 bar to the barrier layer and the sealant layer introduced into the nip roll, and the step difference between the central portion and opposite end portions of the nip roll may range from more than 0.4 mm to less than 1.2 mm.

The roll-to-roll device may be utilized to bond/laminate the sealant layer to one surface of the barrier layer during the manufacturing process of the pouch film. The roll-to-roll device may include the nip roll, the backup roll, and the cooling roll. The nip roll is a core component of the roll-to-roll device. The nip roll makes direct contact with a target to be rolled or bonded to form a sheet having a desired thickness. The backup roll may be provided to make contact with the nip roll to transfer pressure to the nip roll during the rolling process or bonding process, such that the backup roll supports the nip roll in terms of structure. The cooling roll may prevent thermal deformation by cooling down the temperature of the sheet during the rolling process or bonding process. According to the method for manufacturing the pouch film, as the barrier layer and the sealant layer may be introduced between the nip roll and the cooling roll to perform the rolling or bonding process. The nip roll may apply the pressure ranging from 5 bar to less than 8 bar to the barrier layer and the sealant layer introduced into the nip roll. For example, the pressure of the nip roll may be at least 5.0 bar, at least 5.5 bar, at least 6.0 bar, at least 6.5 bar, less than 8.0 bar, at most 7.5 bar, at most 7.0 bar.

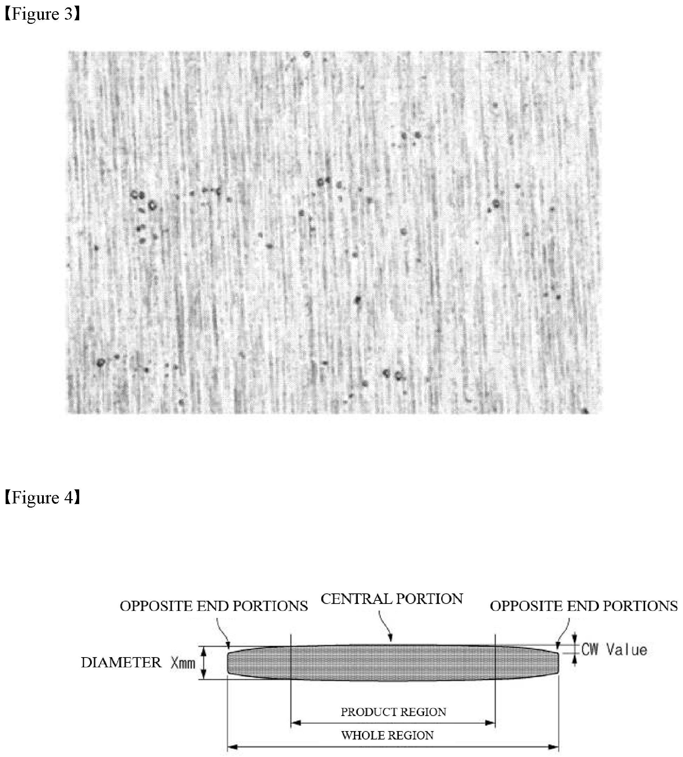

Meanwhile, the step difference between the central portion and the opposite end portions of the nip roll may be greater than 0.4 mm and less than 1.2 mm. FIG. 4 is a side view of the nip roll according to the present disclosure. The step difference refers to the difference in radius between the central portion of the roll and opposite end portions of the roll. The radius refers to one half of the diameter, which is a length from a central line passing through the roll in a longitudinal direction to an outer circumferential surface of the roll. During the rolling or laminating process, the nip roll may also undergo elastic deformation while a workpiece undergoes plastic deformation. The rolls should be completely parallel to each other during the rolling or bonding process. Otherwise, opposite edge portions of the workpiece to be machined (bonded) may have mutually different thicknesses. According to a law of volume constancy, lengths of opposite edges are also differently deformed, such that a wrinkle may be formed. To prevent the elastic deformation of the roll, the roll may be machined such that the diameter at the central portion of the roll is slightly greater than the diameters of opposite end portions, like the nip roll of FIG. 4 according to the present disclosure, thereby preventing the elastic deformation of the nip roll. In this case, in the nip roll according to the present disclosure, a step difference between the central portion and the opposite end portions of the nip roll may be greater than 0.4 mm and less than 1.2 mm. In this case, the step difference between the central portion and the opposite end portions of the nip roll may be expressed as a crown. For example, the step difference between the central portion and the opposite end portions of the nip roll may be greater than 0.40 mm, at least 0.45 mm, at least 0.50 mm, at least 0.55 mm, at least 0.60 mm, at least 0.65 mm, at least 0.70 mm, less than 1.2 mm, at most 1.15 mm, at most 1.10 mm, at most 1.05 mm, at most 1.00 mm, at most 0.95 mm, at most 0.90 mm, at most 0.85 mm, at most 0.80 mm. When the pressure applied to the barrier layer or the sealant layer introduced, by the nip roll and the step difference between the central portion and the opposite end portions of the nip roll deviate from the present range, the number of air bubbles per unit area positioned on the surface of the sealant layer, the TD based on the number of air bubbles, and a proportion of an area occupied by the air bubbles may not be controlled. Accordingly, electrolyte resistance characteristics, insulation characteristics, peel strength, and heat-sealing strength characteristics may be deteriorated.

Meanwhile, according to an embodiment of the present disclosure, the backup roll may make contact with the nip roll, and the pressure applied to the nip roll by the backup roll may range from 5 bar and less than 8 bar. For example, the pressure applied to the nip roll by the backup roll may be at least 5.0 bar, at least 5.5 bar, at least 6.0 bar, at least 6.5 bar, less than 8.0 bar, at most 7.5 bar, or at most 7.0 bar. When the pressure satisfies the range, the number of air bubbles is reduced from the surface of the sealant layer, thereby improving electrolyte resistance characteristics, insulation characteristics, peel strength, and heat-sealing strength characteristics.

In addition, according to an embodiment of the present disclosure, the pressure of the nip roll and the pressure applied to the nip roll by the backup roll may be equal to each other. When the pressure of the nip roll is higher than the pressure of the backup roll, the pressure may not be sufficiently transferred during the lamination process, thereby deteriorating electrolyte resistance characteristics, insulation characteristics, peel strength, and heat-sealing strength characteristics. In contrast, when the pressure of the nip roll is lower than the pressure of the backup roll, the imbalance in pressure may cause the wrinkle during the lamination process.

In addition, according to an embodiment of the present disclosure, the laminating process may be performed by adding at least one selected from the group consisting of polytetrafluoroethylene, a silicone-based resin, and an amide-based resin. Specifically, the additive may be prepared by polymerizing at least one monomer selected from the group consisting of vinylidene fluoride, hexafluoropropylene, tetrafluoroethylene, and ethylene. The additive has high inertness, excellent thermal stability, and low surface energy to a chemical reaction and may be present as an independent particle without being mixed with another type of polymer in the matrix resin. When the additive is added in the manufacturing process, a surface energy between a metal wall surface and a molten polymer in an extruder may be lowered, and a frictional force in a die may be reduced. Accordingly, the melt fracture, which is a surface defect phenomenon occurring during extrusion in a molten state, may be removed, and the glass may be improved, the surface defects may be reduced, and the surface roughness may be improved.

The additive may be added in an amount ranging from 500 ppm to 10,000 ppm, based on the total weight of the sealant layer. For example, the additive may be at least 500 ppm, at least 600 ppm, at least 700 ppm, at least 900 ppm, at least 950 ppm, at least 1000 ppm, at most 10,000 ppm, at most 9,000 ppm, at most 8,000 ppm, at most 7,000 ppm, at most 6,000 ppm, at most 5,000 ppm, at most 4,000 ppm, at most 3,000 ppm, at most 2,000 ppm, at most 1,900 ppm, at most 1,700 ppm, at most 1,500 ppm, at most 1,300 ppm, at most 1,100 ppm, based on the total weight of the sealant layer. When the additive is added in the range, the surface of the sealant layer may be modified to reduce the surface contamination, such that the number of air bubbles may be reduced, thereby manufacturing the pouch film having excellent quality.

Hereinafter, examples of the present disclosure will be described in detail so that those skilled in the art to which the present disclosure pertains may readily reproduce the present disclosure. However, the present disclosure may be implemented in various forms, and is limited to embodiments described herein.

### Example 1

A pouch film was manufactured to include the stack structure of an outer layer, a barrier layer, and a sealant layer, in which the outer layer employed the lamination of an outermost portion including a polyethylene terephthalate (PET) film (having the thickness of 12 µm) and an inner portion including a nylon (Ny) film (having the thickness of 15 µm), the barrier layer employed aluminum (having the thickness of 40 µm), and the sealant layer (having the thickness of 80 µm) including a polypropylene extrusion coating (EC) layer (having the thickness of 30 µm) and a cast polypropylene (CPP) film (having the thickness of 50 µm) using an extrusion lamination manner. The barrier layer and the sealant layer were injected between a nip roll and a cooling furnace and laminated through the extrusion lamination manner. In this case, the pressure of the nip roll was 5 bar, the pressure of the backup roll was 5 bar, and the difference (crown) in diameter between the central portion of the nip roll and opposite end portions of the nip roll was 0.6 mm.

### Examples 2 to 6

Pouch films were manufactured in a manner the same as that of Example 1, except that conditions of the pressure of the nip roll, the pressure of the backup roll, and the difference (crown) in diameter between the central portion of the nip roll and the opposite end portions of the nip roll were changed as shown in following Table 1. In addition, in Examples 3 and 6, an additive, which was prepared by copolymerizing VF₂, HFP, TFE, and ethylene propylene, was added in an amount of 1000 ppm during the extrusion lamination process.

### Comparative Examples 1 and 7

Pouch films were manufactured in a manner the same as that of Example 1, except that conditions of the pressure of the nip roll, the pressure of the backup roll, and the difference (crown) in diameter between the central portion of the nip roll the opposite end portions of the nip roll were changed as shown in following Table 1. In addition, in Comparative Example 4, an additive, which was prepared by copolymerizing VF₂, HFP, TFE, and ethylene propylene, was added in an amount of 1000 ppm during the extrusion lamination process.

### Experimental example

### (1) The number of air bubbles per unit area (ea/mm²)

An image of the interface between the barrier layer and the sealant layer was taken by using an optical microscope (OLS5100 (3D laser microscope) by Olympus) having Lens ×10, a measurement area of 1.637 mm², and a white LED lamp light source. The area of the air bubbles appeared at the interface between the barrier layer and the sealant layer was measured by inputting a magnification of the taken image. The number of air bubbles per unit area was calculated by dividing the measured number of air bubbles by the measured area.

### (2) A ratio (%) of a bubble area per unit area on a surface of the sealant layer

An image of the interface between the barrier layer and the sealant layer was taken by using an optical microscope (OLS5100 (3D laser microscope) by Olympus) having Lens ×10, a measurement area of 1.637 mm², and a white LED lamp light source. The area of the air bubbles appeared at the interface between the barrier layer and the sealant layer was measured by inputting a magnification of the taken image. The number of air bubbles per area was calculated by dividing the sum of the air bubble areas after the measurement by the measurement area of 1.637 mm².

### (3) TD

An image of the interface between the barrier layer and the sealant layer was taken by using an optical microscope (OLS5100 (3D laser microscope) by Olympus) having Lens ×10, a measurement area of 1.637 mm², and a white LED lamp light source. The area of the air bubbles appeared at the interface between the barrier layer and the sealant layer was measured by inputting a magnification of the taken image. The number of air bubbles per unit area was calculated by dividing the measured number of air bubbles by the measurement area. The deviation value was calculated by calculating the number of air bubbles per unit area at a gap of 10 cm based on the entire width of the MR.

### (4) Insulation resistance defect rate

1,000 dummy cells (small cells) having a size of 30 mm × 40 mm and including a pouch film according to each of Examples 1 to 6 and Comparative Examples 1 to 6 were manufactured, a voltage of 250 V was applied to an aluminum tab part and an aluminum layer (barrier layer) part of a pouch to measure an insulation resistance value (GR) using an insulation resistance measuring device. When the insulation resistance value is at most 100 MΩ, a relevant cell was recorded as being defective and a defect rate was calculated.

**[Table 1]**

| Classification | | Example 1 | Example 2 | Example 3 | Example 4 | Example 5 | Example 6 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|---|---|
| Additive | Fluorine-based polymer | - | - | 1000 ppm | - | - | 1000 ppm | - | - | - | 1000 ppm | - | - | - |
| Pressure | Nip roll (bar) | 5 | 6 | 6 | 5 | 6 | 6 | 4 | 5 | 6 | 6 | 5 | 6 | 8 |
| | Backup | 5 | 6 | 6 | 5 | 6 | 6 | 4 | 5 | 6 | 6 | 5 | 6 | 8 |
| | roll(bar) | | | | | | | | | | | | | |
| | Crown (mm) | 0.6 | 0.6 | 0.6 | 0.8 | 0.8 | 0.8 | 0.4 | 0.4 | 0.4 | 0.4 | 1.2 | 1.2 | 0.8 |
| The number of air bubbles (EA/mm²) per unit area | | 19.5 | 14.8 | 13.8 | 15.5 | 10.2 | 8.0 | 45.2 | 41.4 | 39.5 | 37.4 | 30.2 | 22.3 | 2.3 |
| The number of smaller-particle-diameter air bubbles per unit area | | - | - | 8.2 | - | - | 5.2 | - | - | - | 13.8 | - | 9.1 | - |
| The number of larger-particle-diameter air bubbles per unit area | | - | - | 5.6 | - | - | 2.9 | - | - | - | 23.5 | - | 8.6 | - |
| Area (%) | | 1.0 5 | 0.65 | 0.43 | 0.45 | 0.24 | 0.13 | 2.50 | 2.23 | 1.85 | 1.57 | 1.45 | 1.12 | 0.02 |
| TD | | 4.5 | 3.5 | 3.0 | 3.8 | 3.1 | 2.1 | 4.2 | 4.0 | 3.5 | 3.3 | 15.2 | 13.2 | 0.2 |
| Insulation resistance defect rate (effect) | | 0.8 7% | 0.43% | 0.30% | 0.21% | 0.15% | 0.13% | 2.50% | 2.15% | 1.87% | 1.76% | 1.50% | 1.12% | 0.90% |

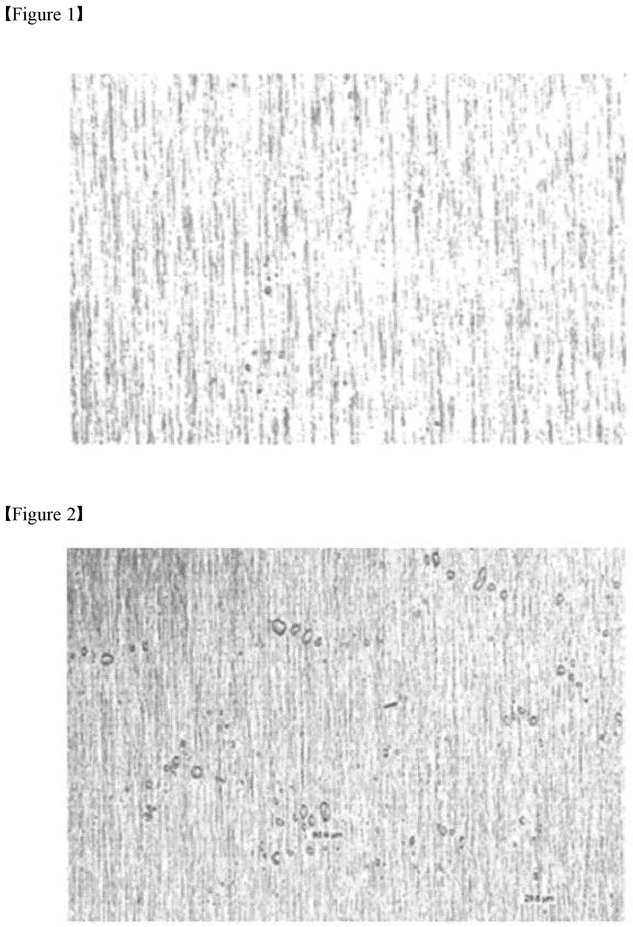

Referring to Table 1 and FIGS. 1 to 3, it may be confirmed that the number of air bubbles per unit area on the surface of the sealant layer according to each of Examples 1 to 6 was in the range according to the present disclosure to exhibit the significantly lower insulation resistance defect rate, as compared with the comparative examples. Further, a ratio (%) of an area occupied by air bubbles relatively to unit area on the surface and the TD according to each of Examples 1 to 6 was in the range according to the present disclosure. it may be confirmed that this was because the components increased the insulation resistance in the systematical correlation with each other.

The pouch film according to an embodiment may be manufactured such that the pressure of the nip roll and the pressure of the backup roll are limited to be in a specific range in the manufacturing process, and the crown is controlled to satisfy a specific numeric value range of the present disclosure, thereby satisfying the condition of the number of air bubbles per specific area may be satisfied. However, the method for manufacturing the pouch film may be one method of various manufacturing methods to satisfy the condition of the number of air bubbles per specific unit area.

In addition, according to Examples 3 and 6, the additive including fluorine-based polymer was added. Accordingly, it may be confirmed that Examples 3 and 6 showed the smaller number of air bubbles per unit area, and exhibited the excellent insulation resistance defect rate, as compared with Examples 2 and 5 manufactured under the same condition. In addition, the number of smaller-particle-diameter air bubbles and the number of larger-particle-diameter air bubbles were measured with respect to Examples 3 and 6 and Comparative Examples 4 and 6 having the same pressure in the nip roll and the backup roll. In this case, the difference of the crown and the number of air bubbles per unit area influence the number of smaller-particle-diameter air bubbles and the number of larger-particle-diameter air bubbles. Accordingly, it may be confirmed that Comparative Examples 4 and 6 were greater than Examples 3 and 6 in the number of smaller-particle-diameter air bubbles and the number of larger-particle-diameter air bubbles.

Comparative Examples 1 to 6 failed to satisfy the condition of the number of air bubbles per unit area of the present disclosure to exhibit the significantly higher insulation resistance defect rate. Accordingly, it may be confirmed that Comparative Examples 1 to 6 were not appropriate as a pouch film. In addition, Comparative Example 7 was less than the lower limit of the range of the air bubbles per unit area of the present disclosure. Accordingly, it may be confirmed that Comparative Example 7 exhibited higher insulation defect rate due to resin degradation caused by excessive pressure during the manufacturing process.

### Acknowledgement

The present disclosure is a result performed to support a following project.
Project Number: 20022450
Ministry: Ministry of Trade, Industry and Energy
Project Management Organization (Specialized Agency): Korea Institute for Advancement of Technology
Research Program Name: Materials and Components Technology Development (Eutteum Company Program)
Project Title: Development of a Next-Generation Secondary Battery Pouch with High Adhesion Strength (60 °C) Achieving at Least Two-Fold Improvement
Contribution Ratio: 1/1
Performing Organization: Youlchon Chemical Co., Ltd.
Project Period: 2024-01-01 to 2024-12-31

## Claims

1. A pouch film comprising:
a sealant layer;
an outer layer; and
a barrier layer including aluminum and disposed between the sealant layer and the outer layer,
wherein the number of air bubbles per unit area on a surface of the sealant layer ranges from 2.5 ea/mm² to 20 ea/mm².

2. The pouch film of claim 1, wherein a ratio of an area occupied by the air bubbles relative to a unit area on the surface of the sealant layer ranges from 0.1 % to 1.1 %.

3. The pouch film of claim 1, wherein the number of air bubbles having a longer length of at least 20 µm per unit area is at most 6.0 ea/mm².

4. The pouch film of claim 1, wherein the number of air bubbles, which have a longer length of less than 20 µm, per unit area is at most 9.0 ea/mm².

5. The pouch film of claim 1, wherein a TD based on the number of the air bubbles on the surface of the sealant layer, which is measured through following measuring manner is at most 5,
[Measuring manner]
An image of the interface between the barrier layer and the sealant layer being taken by using an optical microscope (OLS5100 (3D laser microscope) by Olympus) having Lens ×10, a measurement area of 1.637 mm², and a white light emitting diode (LED) lamp light source; the area of the air bubbles appeared at the interface between the barrier layer and the sealant layer being measured by inputting a magnification of the taken image; the number of air bubbles per unit area being calculated by dividing the number of air bubbles measured by the measured area of the air bubbles; and a deviation value being calculated by calculating the number of air bubbles per unit area at a gap of 10 cm based on an entire width of an MR.

6. The pouch film of claim 1, wherein the sealant layer includes:
at least one type selected from the group consisting of polyethylene, polypropylene, polycarbonate, polyethylene terephthalate, polyvinyl chloride, an acrylic polymer, polyacrylonitrile, polyimide, polyamide, cellulose, aramid, nylon, polyester, poly(p-phenylene benzobisoxazole), polyarylate, Teflon, and glass fiber.

7. The pouch film of claim 1, wherein the sealant layer includes:
an extrusion coating layer and a cast polypropylene layer.

8. The pouch film of claim 1, wherein an insulation resistance defect rate of the pouch film, which is measured through a following method for measuring insulation resistance defect rate is less than 0.9%,
[Method for measuring insulation resistance defect rate]
A total of 1,000 dummy cells (small cells) having a size of 30 mm × 40 mm being manufactured; a voltage of 250 V being applied to an aluminum tab part and an aluminum layer (barrier layer) part of a pouch to measure an insulation resistance value (GΩ) using an insulation resistance measuring device, a relevant cell being recorded as being defective and a defect rate being calculated when the insulation resistance value is at most 100 MΩ.

9. A method for manufacturing a pouch film, the method comprising:
introducing a barrier layer and a sealant layer into a roll-to-roll device including a nip roll, a backup roll, and a cooling roll to laminate the sealant layer on one surface of the barrier layer; and
bonding an outer layer on an opposite surface of the barrier layer,
wherein the nip roll applies pressure ranging from 5 bar to less than 8 bar to the barrier layer and the sealant layer introduced, and
wherein a step difference between a central portion and opposite end portions of the nip roll ranges from more than 0.4 mm to less than 1.2 mm.

10. The method of claim 9, wherein the backup roll makes contact with the nip roll, and applies pressure ranging from 5 bar to less than 8 bar to the nip roll.

11. The method of claim 9, wherein the laminating includes:
adding an additive including at least one selected from the group consisting of polytetrafluoroethylene, a silicone-based resin, and an amide-based resin.

12. The method of claim 11, wherein the additive is added in an amount ranging from 500 ppm to 10,000 ppm, based on a total weight of the sealant layer.

13. The method of claim 9, wherein the pressure of the nip roll is equal to the pressure applied to the nip roll by the backup roll.

14. The method of claim 9, wherein the step difference between the central portion and the opposite end portions of the nip roll ranges from 0.6 mm to 0.8 mm.
